# EUROPEAN PATENT APPLICATION

(11) **EP 4 439 204 A1**
(43) Date of publication of application: **02.10.2024**
(21) Application number: 23164536.7
(22) Date of filing: 28.03.2023
(51) Int. Cl.: G05B 19/042, G05B 19/05

(54) **COMPUTER-IMPLEMENTED METHOD, COMPUTER PROGRAM PRODUCT AND COMPUTER-IMPLEMENTED DEVICE FOR SELECTING VALUES OF OPERATION PARAMETERS OF A MACHINE SYSTEM**

(71) Applicant: Siemens Aktiengesellschaft, 80333 München (DE)
(72) Inventor: Hock, Péter, 1196 Budapest (HU); Kohári, Bence2, 2640 Szendehely (HU); Molnár, Ádám, 2030 Érd (HU); Molnár, Árpád, 9400, Sopron (HU); Nagy, Botond, 1152 Budapest (HU); Tóth, Ádám4, 1134 Budapest (HU)
(74) Representative: Siemens Patent Attorneys

(57) **Abstract**

A computer-implemented method for selecting values of operation parameters of a machine system by a user is presented that comprises the steps of defining a measure of relevance for each of the operation parameters, ordering the operation parameters in ascending or descending order of the measure of relevance, creating at least one user defined list comprising a subgroup of operation parameters with the highest measure of relevance, displaying the user defined list to the user, receiving the values of the subgroup of operation parameters of the user defined list provided by the user and sending the provided values of the subgroup of operation parameters to the machine system.

## Description

### FIELD OF THE INVENTION

The invention relates to a computer-implemented method for selecting values of operation parameters of a machine system by a user. The present invention further relates to a respective computer program product and a respective computer-implemented device. The present invention can be part of a computer-implemented method for controlling a machine system comprising several machines.

### STATE OF THE ART

A computer-implemented method for controlling a machine system is known and a respective computer program product is offered by the applicant as Totally Integrated Automation Portal (TIA Portal). It allows a user to completely access all of the digitalized automation extending from digital planning through integrated engineering up to operation of the machine system. The TIA Portal includes a computer program product called Startdrive which is used to integrate new machines, such as drives, into the automation computer program, here TIA Portal, of an existing machine system. For Startdrive the same user interface can be used as for TIA Portal. Thus new machines can quickly be integrated into the automation environment and commissioned using the TIA Portal.

With TIA Portal a wide range of applications can be implemented, especially for drives. These applications extend from variable-speed axes - such as pumps, fans, mixers, conveyor belts etc. - through positioning axes up to high-end motion control applications - for example handling systems, storage and retrieval machines and packaging machines. Because the user always works with the TIA Portal and its user interface it is not important whether these motion functions are realized in the controller of the machine, e.g. in the controller of a drive, or in the machine drive itself. The TIA Portal can e.g. provide the motion control, closed-loop control and diagnostics of the axes of a drive. Users are guided through the parameterization of the controller and the drive.

The users have the possibility to parameterize their machine via Startdrive supported by user-friendly wizards and screen forms. The various steps are structured according to the particular task, especially by using a structured workflow. In particular parameterization of the security functions integrated in the machine, e.g. a drive, using graphic screen forms is possible. Based on a transparent parameter list, experienced users can work quickly and efficiently.

The state of the art in the field of the invention is to present the entire list of operation parameters to the user so that the user has to look for the parameters he wants to check and/or adapt. The entirety of the operation parameters of a machine system can comprise a lot of parameters, so that this entire list of operation parameters can be very long and confusing and therefore is connected with a very time-consuming activity for the user.

### SUMMARY OF THE INVENTION

One object of the present invention is the reduction in complexity of a list of operation parameters of a machine system that is presented to a user for check-up and adaption purposes and therefore a saving of time for the user.

A further object of the invention is to provide a possibility for the user to adapt the values of a subgroup of operation parameters quick and easy.

The first object is achieved by a computer-implemented method comprising the steps of defining a measure of relevance for each of the operation parameters, ordering the operation parameters in ascending or descending order of the measure of relevance, creating at least one user defined list comprising a subgroup of operation parameters with the highest measure of relevance, displaying the user defined list to the user, receiving the values of the subgroup of operation parameters of the user defined list provided by the user and sending the provided values of the subgroup of operation parameters to the machine system.

Preferably, the user defined list comprises only the subgroup of operation parameters with the highest measure of relevance, and no other operation parameters.

This method avoids the problem of the state of the art and therefore achieves the object of the invention, wherein the user has to select the operation parameters he wants to check and/or adapt by his own. The operation parameters, that are not in a user defined list or are not adapted, remain with default values. The machine system herein is preferably controlled by a Totally Integrated Automation Portal (TIAP) including "Sinamics Startdrive", where the method of the present invention can be embedded.

Possible operation parameters are physical parameters of a machine, such as supply voltages for certain components or angular speeds of parts of the machine, as well as parameters related to the control software of the machine and the machine system the machine is embedded into such as modes of operation of the entire machine or its parts, modes of operation of the displays of the machine or addresses for data exchange and control signals.

In a preferable embodiment of the invention, the user defined list comprises operation parameters more than one time.

This embodiment of the invention contributes to an even better achievement of the previously mentioned object because it may be the case that a single operation parameter has relevance under more than one point of view. These different points of view are represented as sections of the user defined list, where certain operation parameters are grouped, as an example, by a group of parameters related to a conveyor belt and a group of parameters related to a transmission gear. Of course, some of those parameters such as the speed of the belt and the tangent speed of the driving cylinder of the belt are identic. If this is the case, this parameter is listed in more than one section of the user defined list and can be manipulated in all sections where it is listed. As a consequence in terms of consistence, the value of the parameter of course is changed in all sections where it is listed, as soon as it is changed in one of them.

According to one embodiment of the invention, at least one value of the subgroup of operation parameters is prefilled with a default value from a library.

In this way, the process of receiving parameter values by the method can be further automatized and therefore sped up. Further, it can be avoided that a parameter remains unset, or in other words, there is an operation parameter for that no value is received by the method. Leaving an operation parameter unset can lead to serious problems in the machine system and therefore with this embodiment of the invention a safety backup can be implemented.

In a further embodiment of the invention, the method allows for at least one value of the subgroup of operation parameters to be manipulated by the user before providing the values of the operation parameters of the user defined list.

This embodiment adds some additional benefit in terms of the achievement of the previously mentioned object because it corresponds to a safety feedback loop. Before the operation parameters on the user defined list are finally set and sent to the machine system, where they unfold their effect, they can be checked and corrected by the user. Further, it allows the user to overrule the operation parameter assignment being done by the method.

In a preferably embodiment of the invention, which embodiment achieves the further object of the invention, the method allows for the values of all operation parameters comprised by the user defined list to be provided with a single action of the user.

So at the end all operation parameters and all respective values are displayed to the user and the user can select all those settings at the same time, e.g. by clicking a respective button on the display. This way a one click configuration is accomplished.

By proceeding like this, the object of the invention can be achieved even more effective, because it further speeds up the operation parameter assignment process. Beneficially, this embodiment of the invention can be implemented in cases where the operation parameters of a user defined list are standard parameters that do not change a lot from machines of the same type in a machine system.

According to different embodiment of the invention, several user defined lists, differing from each other by at least one operation parameter, are created and stored in a database.

With this embodiment of the invention, the complexity of the operation parameter assignment process can be further reduced. It may be the case that there are more than one set of values that would make sense to be assigned to the same subset of operation parameters. This can be because of different operation modes of the same machine system, as an example for different types of a product produced with the same machine system. In such a case it can reduce the complexity of the operation parameter assignment process for the user, if he has one user defined list for each operation mode.

In a preferable embodiment of the invention, the value of at least one operation parameter of the user defined list is compared to values of this operation parameter in different operation modes of the machine.

So the actual values of the operation parameters of the machine can be compared to any predefined standard values such as factory values, different user defined values, online/offline values etc. So e.g. the actual values (such as measured values) of the drive, in online and/or offline mode, can be compared to factory values of the drive, to user defined values of the drive and to online/offline values of the drive.

The value to be compared and/or the result of the comparison, e.g. the difference in the values, can be displayed in the user defined list, preferably near the respective operation parameter.

The invention also relates to a computer program product that implements the previously described methods in a system comprising the machine system and a computer of the machine system.

So in any case the computer program product will cause a computer which is connected to the machine system
- to define a measure of relevance for each of the operation parameters,
- to order the operation parameters in ascending or descending order of the measure of relevance,
- to create at least one user defined list comprising a subgroup of operation parameters with the highest measure of relevance,
- to display the user defined list to the user,
- to receive the values of the subgroup of operation parameters of the user defined list provided by the user and
- to send the provided values of the subgroup of operation parameters to the machine system.

The invention also relates to a computer-implemented device that is adapted to execute any of the methods described within the previously discussed embodiments of the invention.

This device implements the previously described methods in hardware, what makes the method independent from any support hardware and therefor allows to execute the previously described methods in a closed environment.

The computer-implemented device comprises the machine system and at least one computer connected to the machine system. The computer is connected to at least one display for displaying information to the user, namely the user defined list, and to an input device where the user can enter the values of the operation parameters and confirm the values. The input device can e.g. comprise a keyboard and a computer mouse.

### WAYS TO IMPLEMENT THE INVENTION

In an automation computer program for a system of several machines, e.g. in the Totally Integrated Automation Portal (TIA Portal), a computer program for commissioning, e.g. Startdrive, is started. One possible way to implement the invention is to define in a first step a measure of relevance for each of the operation parameters of a machine system. In a second step, the measure of relevance is used as a parameter for ordering the operation parameters in ascending or descending order. The next step is to create at least one user defined list comprising a subgroup of operation parameters with the highest measure of relevance for the user. Usually just the parameters of highest relevance need to be controlled by the user. The method is then continued by displaying the user defined list to the user, so that the user has the possibility to check all of the displayed parameters and their values. After that, the computer program receives the values of the subgroup of operation parameters of the user defined list from the user. The method gets completed by sending the provided values of the subgroup of operation parameters to the machine system.

Independent of the grammatical term usage, individuals with male, female or other gender identities are included within the term.

## Claims

1. Computer-implemented method for selecting values of operation parameters of a machine system by a user, **characterized in that** the computer-implemented method comprises the steps of
- defining a measure of relevance for each of the operation parameters,
- ordering the operation parameters in ascending or descending order of the measure of relevance,
- creating at least one user defined list comprising a subgroup of operation parameters with the highest measure of relevance,
- displaying the user defined list to the user,
- receiving the values of the subgroup of operation parameters of the user defined list provided by the user and
- sending the provided values of the subgroup of operation parameters to the machine system.

2. Method according to claim 1, **characterized in that** the user defined list comprises operation parameters more than one time.

3. Method according to any of the preceding claims, **characterized in that** at least one value of the subgroup of operation parameters is prefilled with a default value from a library.

4. Method according to any of the preceding claims, **characterized in that** it allows for at least one value of the subgroup of operation parameters to be manipulated by the user before providing the values of the operation parameters of the user defined list.

5. Method according to claim 4, **characterized in that** it allows for the values of all operation parameters comprised by the user defined list to be provided with a single action of the user.

6. Method according to any of the preceding claims, **characterized in that** several user defined lists, differing from each other by at least one operation parameter, are created and stored in a database.

7. Method according to one of the preceding claims, **characterized in that** the value of at least one operation parameter of the user defined list is compared to values of this operation parameter in different operation modes of the machine.

8. Computer program product **comprising** instructions to cause a computer of the machine system to perform all the steps of a method according to claims 1, 2, 3, 4, 5, 6 or 7.

9. Computer-implemented device **comprising** the machine system which device is adapted to execute a method according to one of claims 1, 2, 3, 4, 5, 6 or 7.
